(19) Europäisches Patentamt / European Patent Office / Office européen des brevets

(11) EP 1 023 381 B1

(12) EUROPEAN PATENT SPECIFICATION

(45) Date of publication and mention of the grant of the patent: **02.04.2014 Bulletin 2014/14**

(21) Application number: **98947414.3**

(22) Date of filing: **09.10.1998**

(51) Int Cl.: ***C08K 7/04*** *(2006.01)* ***C08K 9/04*** *(2006.01)*

(86) International application number: **PCT/DK1998/000440**

(87) International publication number: **WO 1999/019396 (22.04.1999 Gazette 1999/16)**

(54) **REINFORCING MINERAL FIBRES**

MINERALISCHE VERSTÄRKUNGSFASERN

RENFORCEMENT AVEC FIBRES MINERALES

(84) Designated Contracting States: **AT BE CH DE DK ES FI FR GB GR IE IT LI LU NL PT SE**

(30) Priority: **10.10.1997 EP 97610046**

(43) Date of publication of application: **02.08.2000 Bulletin 2000/31**

(73) Proprietor: **Rockwool International A/S**
**2640 Hedehusene (DK)**

(72) Inventors:
- **HENNISSEN, Bernardus, G., M.**
  **NL-6019 BS Wessem (NL)**
- **GHIJZEN, Cor, J., M.**
  **NL-6114 MZ Susteren (NL)**

(74) Representative: **Plougmann & Vingtoft A/S**
**Rued Langgaards Vej 8**
**2300 Copenhagen S (DK)**

(56) References cited:
**EP-A- 0 060 664** **DE-A- 3 205 108**
**US-A- 4 528 304**

- **DATABASE WPI Section Ch, Week 8440 Derwent Publications Ltd., London, GB; Class L02, AN 84-248352 XP002058261 & SU 904 288 A (MOSC ENG CONS INST) , 23 April 1984**
- **DATABASE WPI Section Ch, Week 8649 Derwent Publications Ltd., London, GB; Class A26, AN 86-323322 XP002058262 & JP 61 241361 A (MATSUSHITA ELEC IND CO LTD), 27 October 1986**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to free-flowing mineral fibres for use in the reinforcement of thermoplastic and thermosetting materials.

BACKGROUND OF THE INVENTION

Moulded thermoplastic and thermosetting materials, including thermoplastic materials based on e.g. polypropylene, are often fibre reinforced with e.g. glass fibres or other mineral fibres. The most common type of fibre reinforcement for such materials has traditionally been glass fibres, since glass fibres have until now had certain advantages over mineral fibres. Among the advantages of glass fibres for reinforcement purposes are high strength, the ability to be uniformly distributed in e.g. a polypropylene mass, a high aspect ratio (ratio between length and diameter), and the possibility to treat the fibres in order to improve their bonding to the polymer mass into which they are to be incorporated. A major disadvantage of glass fibres, on the other hand, is their high price, which makes it desirable to seek alternatives with similar performance but at lower cost.

Mineral fibres such as rock or slag fibres are also known for use in reinforcement of thermoplastic and thermosetting materials. Compared to glass fibres, such mineral fibres have the advantage of having a lower price, but the prior art mineral fibres have also had disadvantages in terms of lower strength as well as problems in feeding the fibres into the hopper during compounding, since the prior art mineral fibres tend to form agglomerates that make handling of the fibres difficult. Attempts have been made to produce "free-flowing" mineral fibres by e.g. incorporating the fibres in a wetting agent, but such fibres have tended to result in a strength reduction in the finished article due to an undesired lubricant effect of the wetting agent in the polymer, caused by excessively high concentrations of the wetting agent. Furthermore, mineral fibres have often suffered from the disadvantage of having a low aspect ratio, which results in a reduced reinforcement effect in the finished product. This is due to the fact that the presence of silica groups on the surface of the fibres leads to surface degradation of the fibres due to hydrolysis and/or oxidation, which in turn results in the fibres becoming brittle. Due to their brittle nature, the fibres tend to break easily, whereby the aspect ratio of the individual fibres is reduced. A further problem of the prior art mineral fibres is that it has proved difficult to obtain a good bonding of the fibres to the polymer.

US 4,528,304 discloses polyamide resin compositions comprising 20-80% by weight of inorganic fibres, of which 15-85% is glass fibre and the remaining part is ground mineral fibre with an aspect ratio of 5-100. The fibres may be treated with various coupling agents, including silane coupling agents, by spraying the fibres with the coupling agent, dipping the fibres in the coupling agent or dryblending the fibres with the coupling agent.

EP 0 060 664-A discloses reinforced sheet materials comprising 10-35% by weight of a cured elastomeric binder and 20-70% by weight of glass fibres or mineral fibres surface-treated with a composition that is readily soluble in the solvent used to compound the elastomeric binder, for example a silane coupling agent. The surface treatment is said to allow the fibres to become dispersed in the elastomeric binder.

DE 32 05 108-A discloses homogeneous, agglomerate-free mineral fibre mixtures prepared by granulating and crushing an initial mixture. The fibres are disclosed for use as a filler in paper, cardboard, brake linings, etc.

SU 904 288 (Derwent abstract No. XP-002058261) describes surface treatment of mineral fibres with 0.05-5% by weight of a surfactant before or after deposition of the fibres onto a conveyor belt, and before impregnating the fibres with a binder. Treatment of the fibres with the surfactant is said to improve the impregnation with the binder.

JP 61 241361 (Derwent abstract No. XP-002058262) describes a silicone rubber composition containing a filler, e.g. mineral fibres, surface treated with a coupling agent, preferably a vinyl silane coupling agent.

The present invention aims at solving the above-mentioned problems of mineral fibres, so that free-flowing mineral fibres can advantageously be produced and used for reinforcement of thermoplastic and thermosetting materials. One object of the present invention is therefore to provide mineral fibres, in particular free-flowing mineral fibres, that result in improved properties in a fibre-reinforced thermoplastic or thermosetting material by means of improved bonding between the fibres and the polymer. Another object of the invention is to provide mineral fibres that are readily able to be uniformly distributed in a thermoplastic or thermosetting resin. An additional object of the invention is to provide mineral fibres that provide an improved reinforcing effect by virtue of the fibres having an improved aspect ratio. A further object of the invention is to provide mineral fibre-reinforced thermoplastic and thermosetting materials with improved strength characteristics. These and other objects of the invention will be apparent from the description below.

BRIEF DISCLOSURE OF THE INVENTION

One aspect of the invention relates to a mineral fibre which is treated with a coupling agent, at least 30% by

weight of said coupling agent at the surface of the fibre being bound to the fibre through chemical M-O-M bonds where M is Si, Ti or Zr, as determined by the Soxhlet toluene test method.

A second aspect of the invention relates to a mineral fibre granulate comprising mineral fibres according to the invention, wherein the mineral fibres are coated with or embedded in a compatibilizer or wetting agent; said compatibilizer being a chemically reactive surfactant which is able to react with groups on the mineral fibre surface, the compatibilizer having a first moiety capable of interacting with the coupling agent-carrying mineral fibres such that the coupling agent-carrying mineral fibres are readily able to be mixed with the compatibilizer, and a second moiety capable of interacting with a thermoplastic or thermosetting polymer such that the compatibilizer, via its second moiety, is readily able to become mixed in the polymer; said wetting agent being non-chemically reactive towards the mineral fibres.

A third aspect of the invention relates to a free-flowing mineral fibre granulate suitable for the reinforcement of thermoplastic or thermosetting materials, said granulate comprising mineral fibres according to the invention and which are coated with or embedded in a compatibilizer or wetting agent, the mineral fibre granulate being able to flow in a mass flow pattern out of a model silo having stainless steel walls with a round hopper, a hopper angle of 30° and a hopper opening diameter of 20 cm.

A fourth aspect of the invention relates to a thermoplastic granulate suitable for moulding, comprising granules of a thermoplastic material with a compatibilizer or wetting agent and coupling agent-carrying mineral fibres as described above distributed therein, the compatibilizer or wetting agent serving to enhance dispersibility of the mineral fibres in the thermoplastic material to result in a substantially uniform distribution and substantially random orientation of the mineral fibres in the thermoplastic material.

A fifth aspect of the invention relates to a shaped article comprising a reinforced thermoplastic material prepared from such a thermoplastic granulate.

A sixth aspect of the invention relates to a shaped article comprising a reinforced thermoplastic or thermosetting material and, substantially uniformly distributed in one or more domains of the thermoplastic or thermosetting material, reinforcing mineral fibres as described above.

A seventh aspect of the invention relates to a process for producing a mineral fibre granulate, comprising mixing and rolling spun mineral fibres with a compatibilizer or wetting agent and drying the mixture to result in a free-flowing granulate comprising mineral fibres embedded in the compatibilizer or wetting agent.

An eighth aspect of the invention relates to a process for producing coupling agent-treated mineral fibres, comprising spinning mineral fibres and applying to the hot spun fibres 0.01-5% by weight of a coupling agent solution.

## DETAILED DESCRIPTION OF THE INVENTION

The term "mineral fibre" in the context of the present invention refers to a man-made vitreous fibre of the type generally used for the production of slag or rock wool. Such "mineral fibres" are generally composed of calcium magnesium aluminium silicate glass and typically also include a substantial content of iron oxide. More information on such fibres may be found in "Man-Made Vitreous Fibers: Nomenclature, Chemical and Physical Properties" by the Nomenclature Committee of TIMA Inc. (Revision 2, March 1, 1993). The term "mineral fibres" as used herein is also intended to cover so-called "biodegradable" or "biosoluble" mineral fibres, which are known in the art. Such fibres are described e.g. in EP 0791087-B1, which discloses man-made vitreous fibres that are biodegradable in the lung, the fibres having a high dissolution rate at pH 4.5 and a low dissolution rate at pH 7.5.

In the context of the present invention, the term "free-flowing" refers to mineral fibres, in particular in the form of mineral fibre granulates as described herein, that are able to flow uniformly and readily from a delivery device (e.g. a delivery or feed hopper) to a surface or container. Whether a mineral fibre product is free-flowing may be readily determined by visual observation of the product in question, a non-free-flowing product resulting in discontinuous flow, blockage of the hopper, etc.

Free-flowing fibre granulates according to the invention may in particular be defined as mineral fibres fulfilling one, or preferably both, of the following criteria:

the fibre granulates contain less than about 10% by weight of loose mineral fibres, typically less than about 5%, preferably less than about 3%, more preferably less than about 2%;

- the bulk density of the mineral fibre granulate is greater than about 300 g/l, preferably greater than about 350 g/l, e.g. greater than about 400 g/l.

The determination of the amount of loose fibres in a fibre granulate sample may be performed by drying the sample, e.g. at a temperature of 105°C, and then sieving off the loose fibres, e.g. using sieves with openings of 1400 $\mu$m and 600 $\mu$m. In this case, the loose fibres are those that fall through both sieves.

A suitable test for determining whether a sample of mineral fibres is "free-flowing" is to determine whether the fibres are able to flow out of a standardised hopper in a mass flow pattern. The term "mass flow" is known in the art of

silo design and refers to the fact that the whole contents of a silo is in movement when product is withdrawn from the bottom of the silo, i.e. the "first in - first out" principle applies to the flow, which is regular and easily controllable. A less desirable flow pattern is "core flow" or "funnel flow", where the product flows through the core of the silo, so that stagnant zones where product is at rest are found along the wall areas of the silo. The presence of mass flow depends on the internal friction of the product, the wall friction, the hopper shape, the hopper angle and the size of the hopper opening. For a given hopper, the "mass flow angle", which is the angle of the hopper (to the vertical) where mass flow can still occur, may be calculated (when the internal friction and wall friction are known) or determined empirically. At angles greater than the mass flow angle, i.e. less steep hoppers, funnel flow will occur.

To test the flow properties of a sample of mineral fibres, a model silo having stainless steel walls with a round hopper, a hopper angle of 30°, and a hopper opening diameter of 20 cm may be employed. For testing, the silo is filled to a minimum fill level of 30 cm above the transition from the silo to the hopper, and a maximum fill level of not more than 3 m. When filling a completely empty silo, a small quantity of the fibres (e.g. about 5 litres) should be withdrawn once the fill level reaches the transition, so as to avoid a "bridging" effect caused by fibres at the bottom of the silo being subjected to a higher pressure. Product should be withdrawn evenly over the entire area of the opening. Using such a standard hopper, mineral fibres are defined as "free-flowing" if they are able to flow out of the hopper in a mass flow pattern. Non-free-flowing fibres, on the other hand, will - if they are able to flow out of the hopper at all - flow in a funnel flow pattern. The flow pattern in any given case can readily be determined by visual observation. Preferably, the free-flowing fibres also flow in a mass flow pattern using the same type of hopper and the same procedure, but with a hopper opening diameter of 15 cm.

Although the above-described test is provided as an example of one suitable test for determining flow properties of mineral fibres, it is contemplated that mineral fibres according to the invention may also be "free-flowing" under more stringent conditions, for example when tested in the same type of hopper but with a greater flow angle, e.g. an angle of 35° or 40° or even 45° or more.

The mineral fibres of the invention are intended for use as reinforcing fibres in all types of thermoplastic and thermosetting materials, in particular for moulded thermoplastic or thermosetting shaped articles. Examples of thermoplastic materials into which the fibres of the invention may be incorporated are polyolefins, including polypropylene, polyethylene and copolymers thereof, polyamides, polyurethanes, polyesters, vinyls, including polyvinyl chloride (PVC), acrylics, styrenes, polycarbonates, polyimides and ABS (acrylonitrile-butadiene-styrene) materials.

Examples of thermosetting materials into which the fibres may be incorporated are phenolic and phenol-aldehyde resins, furan resins, aminoplastics, alkyds, epoxy resins, silicones, thermosetting polyesters of unsaturated alcohols or unsaturated acids, and thermosetting polyurethanes.

A preferred thermoplastic material for which the fibres of the invention are particularly suited is polypropylene.

The invention is in part based on the treatment of mineral fibres with a "coupling agent" chemically reacted with and bonded to the fibre. A primary function of the coupling agent is to aid in the bonding of the mineral fibres to the polymer material into which the fibres are incorporated. A key feature of the present invention is that the coupling agent is not just weakly held on the surface of the mineral fibres by means of e.g. hydrogen bonds, but is in fact chemically bonded to the mineral fibres, i.e. covalently bonded.

The coupling agent is preferably in the form of a compound, or a mixture of compounds, of the general formula I

$$(XO)_3\text{-M-Y} \qquad \text{(I)}$$

wherein each X independently is a group selected from hydrogen, $C_{1-6}$-alkyl, $C_{2-6}$-alkenyl, $C_{2-6}$-alkynyl, phenyl or benzyl, where each phenyl and benzyl group may be optionally substituted with one or more substituents selected from nitro, halogen, amino, hydroxy, $C_{1-6}$-alkyl, $C_{2-6}$-alkenyl, $C_{2-6}$ -alkynyl, $C_{1-6}$-alkoxy, and M is Si, Ti or Zr;
Y is a group of the general formula II

$$\text{-}(CR^1R^2)_i\text{-}Y^1 \qquad \text{(II)}$$

wherein each $R^1$ and $R^2$ independently designate a group selected from hydrogen, $C_{1-6}$-alkyl, $C_{2-6}$-alkenyl, $C_{2-6}$-alkynyl, aryl, ar-$C_{1-6}$-alkyl, ar-$C_{2-6}$-alkenyl, $C_{1-6}$-alkoxy, $C_{2-6}$-alkenyloxy, aryloxy, $C_{1-6}$-alkylcarbonyl, and mono- and di($C_{1-6}$)amino, which may be optionally substituted with one or more substituents selected from halogen, nitro, amino and hydroxy, i is an integer in the range from 1 to 20, and Y' designates hydrogen, $-NH_2$, $-CONH_2$, -COOH, $-SO_3H$, $-M(OX)_3$ or a group of the general formula III

$$[\text{-}A_j\text{-}(CR^3R^4)_{k(i)}]_j\text{-}Y^2 \qquad \text{(III)}$$

where the segment set number j is an integer in the range from 1 to 10, and each k(j) is an integer in the range from 1 to 20, $A_j$ within each segment set is a group selected from -NH-, $-NR^A-$,$-N^+(R^BR^C)-$, -O-, -S-, -C(O)-, -O-C(O)-, -C(O)-O-,

-C(O)-NH- and -NH-C(O)-, each $R^3$ and $R^4$ independently can designate any of the groups mentioned above for R' and $R^2$, each of $R^A$, $R^B$, and $R^C$ independently can designate any of the groups mentioned above for $R^1$ and $R^2$, and $Y^2$ designates hydrogen, $-NH_2$, $-CONH_2$, -COOH, $-SO_3H$, $-M(OX)_3$,
or
Y is a group of the general formula IV

$$-O[-M(OX)(Z)-O-M(OX)(Z)-O]_m-M(OX)_p(Z)_r \qquad (IV)$$

wherein m is an integer in the range from 1 to 20, p and r are each 0, 1, 2, or 3, with the proviso that p+r must always equal 3, each Z independently designates a group of the general formula V

$$-(CR^5R^6)_n-Y^1 \qquad (V)$$

wherein n is an integer from 1 to 20, each $R^5$ and $R^6$ independently can designate any of the groups mentioned above for $R^1$ and $R^2$, and Y' is a group as defined above,
or salts thereof.

In coupling agent compounds of the general formula I, M is typically Si, and X is typically methyl, ethyl or propyl.

A suitable "alkyl group" in the terms "$C_{1-6}$-alkyl", "ar-$C_{1-6}$-alkyl", "$C_{1-6}$-alkylcarbonyl" and "mono- and di($C_{1-6}$)alkyl" is a saturated hydrocarbon group with 1-6 carbon atoms which may be straight, branched or cyclic, such as methyl, ethyl, propyl, isopropyl, butyl, isobutyl, sec-butyl, tert-butyl, pentyl, 2,2-dimethylpropyl, hexyl, cyclopentyl, cyclohexyl, etc.

A suitable "alkenyl group" in the terms "$C_{2-6}$-alkenyl", "ar-$C_{2-6}$-alkenyl" and "$C_{2-6}$-alkenyloxy" is a hydrocarbon group with 2-6 carbon atoms. It may be straight, branched or cyclic and contains one or more double bonds, such as ethenyl (vinyl), propenyl (allyl), 1-butenyl, 2-butenyl, isobutenyl, 2-pentenyl, 3-pentenyl, 4-pentenyl, 3-methyl-1-butenyl, 2-methyl-2-butenyl, 1-hexenyl, 2-hexenyl, 3-hexenyl, 4-hexenyl, 5-hexenyl, 2,3-dimethyl-2-butenyl, cyclopentenyl, cyclohexenyl, etc. The alkenyl groups may have the *cis* and/or *trans* configuration.

The term "$C_{1-6}$-alkynyl"is intended to mean straight or branched chain hydrocarbon groups with 2-6 carbon atoms and which contain one or more triple bonds, such as ethynyl, propynyl, 1-butynyl, 2-butynyl, 2-pentynyl, 3-pentynyl, 4-pentynyl, 3-methyl-1-butynyl, 1-hexynyl, 2-hexynyl, 3-hexynyl, 4-hexynyl, 5-hexynyl, 3,3-dimethyl-1-butynyl, etc.

A suitable "aryl group" in the terms "aryl", "ar-$C_{1-6}$-alkyl", "ar-$C_{2-6}$-alkenyl" and "aryloxy" is a 5- or 6-membered aromatic group which may contain one or two heteroatoms selected from the group consisting of N, O and S, such as phenyl, pyridinyl, pyrimidinyl, pyrrolyl, imidazolyl, pyrazonyl, furanyl, oxazolyl, thiophenyl and thiazolyl, preferably phenyl.

A suitable "alkoxy group" in the term "$C_{1-6}$-alkoxy" is an "alkyloxy", i.e. a group with 1-6 carbon atoms, which may be straight, branched or cyclic, and one oxygen atom, such as methoxy, ethoxy, propoxy, isopropoxy, butoxy, isobutoxy, sec-butoxy, tert-butoxy, pentyloxy, 2,2-dimethylpropoxy, hexyloxy, cyclopentyloxy, cyclohexyloxy, etc.

The term "halogen" includes fluorine, chlorine, bromine and iodine.

When the applied coupling agent has a cationic nature (i.e. the coupling agent has a net positive charge) the bonding agent is used in the form of a salt. Suitable counterions are fluoride, chloride, bromide, iodide, and corresponding bases of inorganic and organic acids such as sulphate, phosphate, nitrate, formate, acetate, propionate, benzoate, and mixtures thereof. A preferred counterion is chloride.

Examples of preferred coupling agent compounds are:

$(XO)_3Si-(CH_2)_x-NH_2$, where 25≤x≤7,
$(XO)_3Si-(CH_2)_x-NH-(CH_2)_y-NH_2$, where 2≤x≤7, and 2≤y≤5,
$(XO)_3Si-(CH_2)_x-NH-(CH_2)_y-NH-(CH_2)_z-NH_2$, where 2≤x≤7, 2≤y≤5, and 2≤z≤5,
$(XO)_3Si-(CH_2)_x-N^+(CH_3)_2-(CH_2)_y-CH_3-Cl^-$, where 2≤x≤7, and 1≤y≤20,
$(XO)_3Si-(CH_2)_x-CONH_2$, where 2≤x≤10,
$(XO)_3Si-(CH_2)_x-NH-(CH_2)_y-CONH_2$, where 2≤x≤10, and 2≤y≤5,
$(XO)_3Si-(CH_2)_x-NH-(CH_2)_x-Si(OX)_3$, where 2≤x≤7,
$(XO)_3Si-(CH_2)_x-NH-(CH_2)_y-{}^+N(CH_3)_2-(CH_2)_x-C_6H_5-Cl^-$, where 2≤x≤7, 2≤y≤5, and 0≤z≤5,
$(XO)_3Si-(CH_2)_x-NH-(CH_2)_y-{}^+N(CH_3)_2-(CH_2)_z-C_6H_4(C_2H_3)-Cl^-$, where 2≤x≤7, 2≤y≤5, and 0≤z≤5,
$(XO)_3Si-(CH_2)_x-CH = CH_2$, where 2≤x≤10, and mixtures thereof, wherein X is methyl, ethyl, or propyl.

Additional examples of preferred coupling agents are compounds of the general formula:

$(OX)_3-Si-O[-Si(OX)(Z)-O-Si(OX)(Z)-O]_m-Si(Z)(OX)_2$, where 2≤m≤12, and preferred examples of the group Z are:

- $(CH_2)_x-NH-(CH_2)_y-{}^+N(CH_3)_2-(CH_2)_z-C_6H_4(C_2H_3)-Cl^-$, where 2≤x≤7, 2≤y≤5, and 0≤z≤5,

- $(CH_2)_x$-NH-$(CH_2)_y$-$^+N(CH_3)_2$-$(CH_2)_z$-$C_6H_5 \cdot Cl^-$, where $2 \leq x \leq 7$, $2 \leq y \leq 5$, and $0 \leq z \leq 5$,
- $(CH_z)_x$-CH = $CH_2$, where $2 \leq x \leq 10$,
- $(CH_2)_x$-$CONH_2$, where $2 \leq x \leq 10$,
- $(CH_2)_x$-NH-$(CH_2)_y$-$CONH_2$, where $2 \leq x \leq 10$, and $2 \leq y \leq 5$,
- $(CH_2)_x$-$N^+(CH_3)_2$-$(CH_2)_y$-$CH_3 \cdot Cl^-$, where $2 \leq x \leq 7$, and $1 \leq y \leq 20$,
- $(CH_2)_x$-$NH_2$, where $2 \leq x \leq 7$,
- $(CH_2)_x$-NH-$(CH_2)_y$-$NH_2$, where $2 \leq x \leq 7$, and $2 \leq y \leq 5$,
- $(CH_2)_x$-$NH(CH_2)_y$-NH-$(CH_2)_z$-$NH_2$, where $2 \leq x \leq 7$, $2 \leq y \leq 5$, and $2 \leq z \leq 5$, and mixtures thereof. X is methyl, ethyl or propyl.

Examples of preferred commercially available coupling agent compounds are:

Mixil N50 (available from Degussa AG):

50:50% (mol/mol) of the compounds $(EtO)_3Si$-$(CH_2)_3$-$NH_2$ and $(EtO)_3Si$-$(CH_2)_3$-NH-$(CH_2)_3$-$Si(OEt)_3$; (where Et is an ethyl group). (Good results have also been obtained with other ratios between these two compounds in the range of from about 50:50 to about 80:20, e.g. a ratio of about 75:25.)

Dynasilane 1372 (available from Hüls AG):

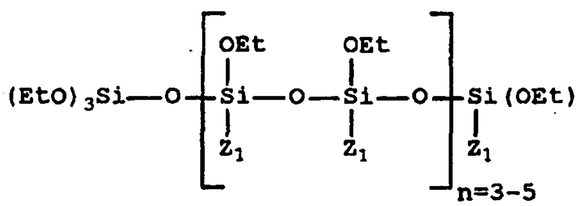

wherein $Z_1$ denotes:

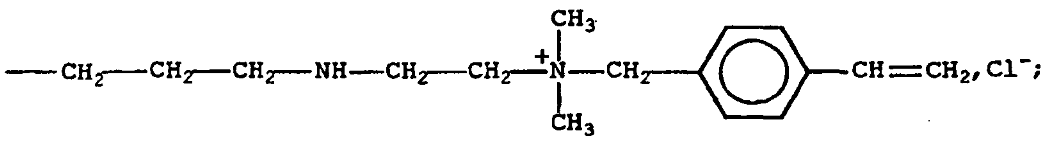

Dynasilane 2220 (available from Hüls AG):

50:50% (mol/mol) of the compounds $(EtO)_3Si$-$(CH_2)_3$-$NH_2$ and $(EtO)_3Si$-$(CH_2)_3$-$CONH_2$.

The amount of coupling agent applied on mineral fibres of the invention is typically in the range of 0.01-5% by weight of the fibre, more typically 0.05-1 %, e.g. 0.1-0.3%.

The chemical bonding of the coupling agent to the mineral fibres can be determined by the Soxhlet toluene test method described below. Fibres of the invention are characterised as having at least about 30% by weight of the coupling agent at the surface of the fibre being bound to the fibre through chemical M-O-M bonds, where M is as defined above, i.e. typically Si-O-Si bonds, as determined by the Soxhlet toluene test method. Typically, at least about 40% by weight of the coupling agent at the fibre surface will be covalently bonded to the fibre in this manner, more typically at least about 50%, preferably at least about 60%, more preferably at least about 70%, still more preferably at least about 80%, most preferably at least about 90%.

Preferably, the fibres are produced in the form of a free-flowing granulate in which a number of individual fibres are held loosely together within small granules or pellets by a wetting agent and/or a "compatibilizer", since it has been found that such mineral fibre granulates allow the fibres to be easily distributed in the thermoplastic or thermosetting polymer.

Examples of suitable wetting agents are e.g. polyethylene oxide (PEO) and derivatives thereof as well as polypropylene oxide and derivatives thereof. The "derivatives" can e.g. be in the form of an increased unsaturation in the molecule, higher molecular weight compounds, amine modification, latex modification, etc. An example of a preferred wetting agent is a polyethylene oxide with a molecular weight in the range of 2000-15,000, preferably 3000-8000, e.g.

4000-6000.

In the case of a compatibilizer, this will, as mentioned above, have a first moiety capable of interacting with the coupling agent-carrying mineral fibres and a second moiety capable of interacting with a thermoplastic or thermosetting polymer. The "interaction" between the first moiety and the coupling agent-carrying mineral fibres refers to the fact that the two should be compatible with each other, so that the coupling agent-carrying mineral fibres are readily able to be mixed with the compatibilizer. Similarly, the "interaction" between the second moiety and a given polymer refers to the ability of the compatibilizer, via its second moiety, to readily become mixed in the polymer. The "interaction" is typically an interaction of a chemical nature, i.e. the formation of chemical bonds. Thus, the "compatibilizer" of the present invention may be defined as being a chemically reactive wetting agent or surfactant which is able to react with groups on the mineral fibre surface, in particular exposed groups of a coupling agent bound to the mineral fibres. The term "wetting agent", on the other hand, refers in the context of the present specification to a non-chemically reactive agent, in other words a "wetting agent" in the traditional sense of the term which fulfils its function by means of physical but not chemical bonding.

Examples of suitable compatibilizers are nonionic, cationic and anionic surfactants with a molecular weight in the range of 1000-25,000, preferably 2000-15,000, the surfactant optionally being modified with one or more reactive groups, e.g. carboxylic acid or anhydride groups. Examples of preferred groups for modification of the surfactant are reactive groups selected from maleic acid, maleic anhydride, malonic acid and malonic ester groups. Also, polymers such as poly(ethylene-propylene), polypropylene and polystyrene-butadiene dissolved in a suitable solvent may be used as a compatibilizer.

The preferred relationships between the mineral fibres, the coupling agent, the wetting agent and/or compatibilizer and the thermoplastic or thermosetting resin may advantageously be described in terms of Hansen solubility parameters (see e.g. Hansen, "Solubility Parameters", Reprint from ASTM Manual 17 in *Paint and Coating Testing Manual,* 1995). Solubility parameters are cohesion energy parameters that reflect the cohesive energy required to convert a liquid to a gas. The concept of Hansen solubility parameters divides the cohesion energy of a material into three components, namely 1) nonpolar interactions ($\Delta E_d$), also known as dispersion interactions, which derive from atomic forces, 2) permanent dipole-permanent dipole interactions ($\Delta E_p$), which are molecular interactions, and 3) hydrogen bonding interactions ($\Delta E_h$). The total cohesive energy $\Delta E_t$ of a material is defined as the sum of these three individual cohesion energies:

$$\Delta E_t = \Delta E_d + \Delta E_p + \Delta E_h$$

The solubility characteristics of a given material can be expressed in terms of a sphere having radius of interaction $R_o$ and whose centre is defined by the dispersion solubility parameter $\delta_d$, the polar solubility parameter $\delta_p$ and the hydrogen bonding solubility parameter $\delta_h$. For two materials, the solubility parameter distance $R_s$ between them can be defined as:

$$R_s = \text{square root}[4(\delta_{d1} - \delta_{d2})^2 + (\delta_{p1} - \delta_{p2})^2 + (\delta_{h1} - \delta_{h2})^2]$$

The radius of interaction $R_0$ for a given material may be found by determining sedimentation times for the material in a standaridised selection of solvents (e.g. 42 standard solvents). The solvents are then rated according to their solvent properties for the given material, and the 3 solubility parameters are calculated for each solvent. The sphere $R_0$ for the given material is a characterisation of those solvents in which the material is compatible in terms of not sedimenting. Further details may be found in Hansen (1995) as well as the references cited therein.

For mixtures, e.g. solvent mixtures, the solubility parameters are simply the average for each of the individual parameters in relation to the volume proportion of the different components of the mixture. For this reason, it is possible to obtain synergistic effects in solvent mixtures, for example miscible blends of two polymers in a solvent mixture in which individual solvents alone do not function as solvents for the polymers in question.

Using the solubility parameter principles and the equations above, it is possible to determine a Relative Energy Difference (RED) between two materials, the RED number being defined as the ratio $R_s/R_0$, where $R_0$ in this case is the value for the matrix polymer (e.g. the radius of interaction for polypropylene in the case of a polypropylene-based composite). For two materials to have an affinity for each other, the RED number should be relatively small. Thus, RED numbers of less than about 1.0 indicate a high affinity, while RED numbers of more than about 1.0 indicate a low affinity. RED numbers equal to or very close to 1.0 indicate a boundary condition, while an RED number of 0 represents no energy difference. It may thus be seen that, for purposes of the present invention, the RED numbers between, on the one hand the first moiety of the compatibilizer and exposed groups of the coupling agent, and, on the other hand, the

second moiety of the compatibilizer and the polymer, should be no more than about 1.0 and preferably as low as possible.

Given a sphere of radius $r_1$ for the Hansen d, p and h parameters (i.e. $\delta_d$, $\delta_p$ $\delta_h$) of the first moiety of the compatibilizer, this sphere should intersect a sphere of radius r' for the Hansen d, p and h parameters of exposed groups of the coupling agent. According to the principles of the Hansen solubility parameters, a higher degree of compatibility (solubility) between the first moiety of the compatibilizer and the exposed groups of the coupling agent will be defined in terms of a higher degree of intersect between the two respective spheres.

Similarly, given a sphere of radius $r_2$ for the Hansen d, p and h parameters of the second moiety of the compatibilizer, this sphere should intersect a sphere of radius r" for the Hansen d, p and h parameters of the polymer, and a higher degree of intersect between these two spheres will similarly represent a higher degree of compatibility (solubility) between the second moiety of the compatibilizer and the polymer.

Another way of expressing these relationships in terms of Hansen solubility parameters is by means of the RED (Relative Energy Difference). In this case, the RED number of the first moiety of the compatibilizer and exposed groups of the coupling agent should be less than about 1.0, and the RED number of the second moiety of the compatibilizer and the polymer should similarly be less than about 1.0. Preferably, either or both of these RED numbers is less than about 0.9, more preferably less than about 0.7, most preferably less than about 0.3. Suitable ranges for the RED numbers are e.g. 0.2-0.8, such as about 0.5-0.65.

The solubility parameters for a given material may be calculated as described by Hansen (1995) and in Hansen, "The Three-Dimensional Solubility Parameter and Solvent Diffusion Coefficient", Danish Technical Press, Copenhagen, 1967 (doctoral dissertation). Furthermore, solubility parameters have been calculated and are known for a large number of different materials. For example, Hansen has calculated solubility parameters for about 850 gasses, liquids and solids (Hansen, "25 years with solubility parameters" ("25 år med opløselighedsparametrene"; in Danish), Dansk Kemi, Vol. 73, No. 8, pp. 18-22, 1992), and solubility parameters for 246 selected liquids and a number of selected polymers are listed in Hansen, 1995. Similarly, Exxon has calculated solubility parameters for 500 solvents and plasticizers, 450 resins and polymers, and 500 pesticides (Anonymous, brochure, "Co-act - a dynamic program for solvent selection", Exxon Chemical International Inc., 1989; Dante and Caillault, "Program calculates solvent properties and solubility parameters", Modern Paint and Coatings, Sept. 1989, 46). Information on solubility parameters may also be found e.g. in two CRC handbooks (Barton, Handbook of Solubility Parameter and other Cohesion Parameters, CRC Press Inc., 1983; Barton, Handbook of Polymer-Liquid interaction Parameters and Solubility Parameters, CRC Press Inc. 1990). Although it is possible to calculate the solubility parameters manually, they may advantageously be calculated by computer, e.g. using a computer program which is available from the Force Institute, Copenhagen, Denmark (Hansen Solubility Computer Program).

In producing the treated mineral fibres of the invention, the initial steps are those commonly used for the preparation of such fibres. The production of the fibres thus typically includes the steps of spinning fibres in a manner known *per se,* collecting the spun fibrous material containing a mixture of fibres and "shots", granulating, "cleaning" and packaging the fibrous material, opening the packaged fibrous material by means of a hammer mill, cleaning the material to remove the shots, adjusting the fibre length, and packaging the final mineral fibre product. For purposes of the present invention, however, one or more additional steps are performed to result in the coupling agent-treated fibres and/or the mineral fibre granulate (see the description of the mixing and rolling process below). Although fibre length is not regarded as being critical in the context of the present invention, the fibres will typically have a length of about 100-1000 μm, such as about 200-700 μm, e.g. about 250-600 μm. Similarly, the diameter of the fibres is not regarded as being critical, but will typically be between about 1-15 μm, e.g. about 3-10 μm, such as about 4-8 μm.

For producing the coupling agent-treated mineral fibres of the invention, the coupling agent is preferably applied to the hot spun fibres substantially immediately after the fibres exit the spinning apparatus, i.e. where the fibres are still very hot. The molten mineral mass used to spin the fibres typically has a temperature of about 1500°C, and after exiting the nozzles of the spinning apparatus, the hot spun fibres will typically have a temperature of about 1250°C. At the point at which the coupling agent is applied the temperature of the fibre surface is typically about 400-800°, e.g. about 500-700°, e.g. about 600°C. Application of the coupling agent to the fibres is typically performed by spraying.

It is believed that the desired chemical bonding of the coupling agent to the mineral fibre surface takes place as a result of the manner in which the coupling agent is applied to the hot mineral fibres. Thus, according to one aspect of the invention, the coupling agent is applied to hot spun mineral fibres in the form of an aqueous solution with an acidic pH, the coupling agent having been mixed with the water having the desired pH just before the coupling agent solution is applied to the mineral fibres. In general, the pH of the solution should be non-neutral, i.e. either acidic or basic, in order to avoid flocculation of the coupling agent. Basic pH values are typically used when the surface of the fibres to be treated has a net positive charge, which is normally the case for biodegradable mineral fibres. Conversely, acidic pH values are typically used when the surface of the fibres to be treated has a net negative charge, which will normally be the case for non-biodegradable mineral fibres.

A preferred acidic pH value is in the range of from about 2 to about 5, e.g. about 3-4.5, such as about 3-4, for example about 3.5-3.7. A preferred acid for obtaining the desired acidic pH is acetic acid, although other acids, including

organic acids such as citric acid and inorganic acids such as sulphuric acid may also be used.

When applying the coupling agent to the fibres under alkaline conditions, the coupling agent, e.g. a silane, will often have a suitable alkaline pH without any need for pH adjustment, in which case the agent may simply be mixed with water. If necessary, the pH of the solution may be adjusted to a suitable value, i.e. typically in the range of about 8-12, more typically about 10-11.5.

When using a non-stabilised water-based system, the concentrated (non-aqueous) coupling agent is preferably added to the water no more than 1 minute before the solution is applied to the fibres, typically no more than about 30 sec, e.g. no more than about 15 sec, such as no more than about 10 sec. It is believed that, as a result of the aqueous coupling agent solution being applied to the mineral fibres in this case shortly after the coupling agent and the water having an acidic pH have been mixed, chemical reactions of the coupling agent molecules in the coupling agent solution, e.g. hydrolysis of methoxy groups to hydroxy groups, take place only to a limited extent prior to application to the mineral fibres, whereby the coupling agent is able to chemically react with the hot mineral fibres upon application thereto. When the coupling agent is applied as part of a water-stable system, however, the above considerations do not apply, and in such cases, it is therefore not necessary to mix the coupling agent solution just before it is applied to the spun mineral fibres. Water-stable systems are generally supplied in stabilised form by the coupling agent manufacturer in order to avoid polymerisation of the coupling agent.

For the preparation of a free-flowing mineral fibre granulate, spun mineral fibres, preferably coupling agent-treated mineral fibres prepared as described above, are mixed and rolled with a compatibilizer or wetting agent, and the mixture is then dried, e.g. using a fluid bed drying system, to result in a free-flowing granulate comprising mineral fibres embedded in the compatibilizer or wetting agent. The mixing and rolling process generally takes place after adjustment of the fibre length and just before packaging of the final product. The fact that the mineral fibre granulate is "free-flowing" means that the granulate is easy to handle and is readily able to be dosed in a thermoplastic or thermosetting resin. It has been found that the mineral fibre granulates maintain their free-flowing, granular characteristics during packing and transport, so that undesired large agglomerations of mineral fibres that are difficult to dose are avoided. An important advantage of the fact that the mineral fibre granulate is free-flowing is the fact that it is well-suited for constant feed into silo systems typically used in the compounding industry. The free-flowing granular product also has the advantage of being more compact than a "loose" mineral fibre product, which results in savings in packaging, storing, transport etc. The mineral fibre granulate of the invention thus typically weighs about 350-800 g/l as opposed to typically about 120-300 g/l for a loose fibre product.

In the case of reinforcement of shaped articles of a thermoplastic material, although it would be possible to incorporate the mineral fibres of the invention into the polymer in question immediately prior to the production of the shaped article, e.g. into a melted polymer mass or a polymer raw material in the form of pellets to be melted, the mineral fibres of the invention will normally be compounded into the polymer in a separate compounding step. Thermoplastic polymers for a wide variety of uses are commonly supplied by a compounder to the producers of the final products in the form of pellets having the desired characteristics for the intended application. For purposes of the present invention, the mineral fibres are thus preferably incorporated into the polymer pellets during compounding, the mineral fibres typically being added in the form of a mineral fibre aggregate. This allows the mineral fibres to become uniformly distributed in the individual polymer pellets, thus facilitating the production of reinforced shaped articles which also have the desired uniform distribution of the reinforcing fibres in the finished product.

In a thermoplastic granulate according to the invention, the amount of mineral fibres will typically be 1-65% by weight, e.g. 5-50%, such as 10-40%, based on the total granulate weight.

When the mineral fibres of the invention are added to a thermoplastic material in the form of a mineral fibre granulate comprising a wetting agent, it is preferred that the amount of wetting agent relative to the amount of fibres and thermoplastic material is as low as possible. This is due to the fact that a wetting agent will tend to function as a lubricant in e.g. a polypropylene polymer, but will on the other hand tend to migrate into the polymer during compounding. It is preferable that essentially all of the wetting agent is able to migrate into the polymer, so as to allow the coupling agent on the fibre surface to react with the (optionally compatibilizer-modified) polymer, thereby allowing an optimal bonding between the fibre and the polymer and thus an optimal reinforcing effect. The amount of wetting agent in relation to the weight of the fibres is therefore typically not more than about 1 % by weight, e.g. not more than about 0.8%, such as not more than about 0.6%. Depending on the wetting agent, the amount will often be as low as not more than about 0.5%, such as not more than about 0.4% or not more than about 0.25%.

Incorporation of the mineral fibres of the invention into the polymer raw material can suitably be accompanied by the incorporation into the polymer of a compatibilizer that has the necessary characteristics for the given system of mineral fibres, coupling agent and polymer, e.g. as determined by using Hansen solubility parameters as described above. When the polymer material supplied to the end producers contains both the coupling agent-treated fibres and a suitable compatibilizer, the result is a complete "ready-to-use" system that can be tailored to the individual needs of the producers of the reinforced shaped articles.

Preferred polypropylene granulates according to the invention (reference polypropylene material: HD-120M

from Borealis), when moulded into a standard test sample containing 30% by weight of the mineral fibres and tested according to ISO R 527, have a tensile strength of at least about 55 MPa, preferably at least about 60 MPa, more preferably at least about 65 MPa, still more preferably at least about 70 MPa, most preferably at least about 75 MPa.

The invention will be further illustrated by the following non-limiting examples.

EXAMPLES

**Preparation and testing of mineral fibres according to the invention**

The general process used to produce free-flowing mineral fibres according to the invention is described in the following. Information regarding pH, type and amount of coupling agent applied, fibre length and diameter, and type and amount of surfactant for the various examples is found below.

In general, the process for the production of free-flowing fibres comprises four steps:

1. Production of the fibres and coating of the fibres with a silane coupling agent.
2. Cleaning the fibres and adjusting the fibre length.
3. Mixing the fibres with a surfactant to produce free-flowing fibre granulates.
4. Drying the fibre granulates.

Further details of the process used are as follows:

Water, adjusted if necessary to the desired pH with acetic acid, is mixed with a coupling agent at a temperature between 20°C and 80°C while stirring. Immediately after mixing, the resulting solution is fed into a nozzle spraying system and applied to spun mineral fibres (the spinning of the fibres being performed by a method known *per se*) by spraying, the spun mineral fibres having a temperature of about 600°C when the coupling agent is applied. Examples of the amount of different coupling agents applied to the fibres, and the amount which was covalently bound as determined according to the Soxhlet toluene test, are described below.

The silane-treated mineral fibres are then subjected to a cleaning process in order to remove non-fibrous material, after which the fibres are adjusted to the desired length by known means.

The silane-treated mineral fibres obtained are then placed in a horizontal mixer with rapidly rotating mixing heads (3000 rpm) and a plough operating at 180 rpm. A surfactant is sprayed onto the mineral fibres at ambient temperature by means of a nozzle placed above the mixing head, the spraying angle being 60°. In the examples below, the surfactant used was LICOMER W19 (Dick Peters bv Chemische Industrie, Holland), which is an emulsion of a hard, high-melting polyethylene wax and a nonionic surfactant. The action of the mixer, which subjects the fibres to a vertical circular movement, and the presence of the surfactant causes the fibres to ball up and form fibre granulates. The mixing time is 10 minutes with the plough and mixing head running, during which time the surfactant is added to the mixer. After the first 10 minutes, the mixing head is turned off, and the plough continues to run for another 10 minutes. After mixing is completed, the fibre granulates are dried in a fluid bed drier using hot air with an inlet temperature of 150°C. The drying process is terminated when the outlet air temperature is about 80°C.

The individual silane coupling agents used were prepared as follows:

Dynasilane 1151 ($(HO)_3Si-(CH_2)_3-NH_2$): The silane is mixed with water to obtain a solution having a pH of about 11 and a concentration of 6% (v/v). No pH adjustment was necessary to obtain this pH. This is a "prehydrolyzed" silane compound, i.e. containing hydroxy groups instead of e.g. ethoxy groups, whereby the silane only becomes chemically bonded to the fibre surface to a very small extent.

Mixil N50: The silane is mixed with water wherein the pH is adjusted to about 3.5 with acetic acid. The final concentration of the silane is 11.8% (v/v).

Dynasilane 1372: A 50% (v/v) solution of the silane in methanol is mixed with water, the pH being adjusted to 3.5 with acetic acid. The final concentration of the silane is 6% (v/v).

*Soxhlet test for binding of coupling agent*

The amount of coupling agent covalently bound to fibres treated with the above-listed coupling agents was determined by the Soxhlet toluene test:

Approximately 10 g of the silane treated fibre was placed in an extraction thimble. The thimble was placed in the Soxhlet equipment, which was filled with approximately 500 ml of toluene. The toulene was refluxed for 2 hours, after which the toluene-treated fibres were rinsed with water. The fibres were collected by filtering through a gooch

crucible filter and dried at 115°C for 30 minutes. The fibres were then subjected to standard pyrolyse gas chromatography and the amount of covalently bound coupling agent (silane) was determined using the formula:

$$\frac{\text{amount of silane after the Soxhlet toluene test}}{\text{amount of silane before the Soxhlet toluene test}} \times 100\%$$

where the amount of silane before the Soxhlet toluene test is the total amount applied to the fibres.

The results obtained were as follows:

| Silane type | Coating - before wt. % | Coating - after wt. % | Amount of coating covalently bound (%) |
|---|---|---|---|
| Dynasilane 1151 | 0.285 | 0.0758 | 26.6 |
| Mixil N50 | 0.210 | 0.195 | 92.9 |
| Dynasilane 1372 | 0.180 | 0.160 | 88.9 |
| Dynasilane 1372 | 0.225 | 0.215 | 95.6 |

*Measurements of cohesion energy*

Hansen solubility parameters were determined on different fibres, including uncoated fibres and two different coated fibres (one without and one with PEO), as well as polypropylene. As the results below show, coating of the fibres leads to a change in cohesion energy from strongly hydrophilic for the uncoated fibres to hydrophobic for the coated fibres, i.e. the cohesion energy of the coated fibres is close to that of polypropylene.

| | Hansen solubility parameters | | | |
|---|---|---|---|---|
| | $\delta_d$ | $\delta_p$ | $\delta_h$ | $R_o$ |
| Uncoated fibre | 17.5 | 14.6 | 13.2 | 14.0 |
| Fibre +0.210% Mixil N50 | 18.2 | 12.0 | 14.0 | 12.3 |
| Fibre + 0.210% Mixil N50 + 0.25% PEO* | 16.5 | 4.5 | 5.8 | 8.9 |
| Polypropylene** | 18.0 | 1.0 | 1.0 | 7.5 |
| * PEO = polyethylene oxide (Licomer W19)<br>* HD-120M, Borealis | | | | |

In addition, Hansen solubility parameters were determined for the following three compatibilizers:

- Poly(ethylene-propylene): Exxon Vestalon 404 (40% ethylene/60% propylene by weight)
- Polypropylene: Hercules Profax 6701 isotactic polypropylene
- Polystyrene-butadiene: Polysar 5630, from Polymer Cooperations, USA

| | Hansen solubility parameters | | | |
|---|---|---|---|---|
| | $\delta_d$ | $\delta_p$ | $\delta_h$ | $R_o$ |
| Poly(ethylenepropylene) | 18.0 | 0.8 | 2.1 | approx. 7 |
| Polypropylene | 17.3 | 0.0 | 1.0 | 11.7 |
| Polystyrene-butadiene | 17.6 | 3.4 | 2.7 | 6.6 |

For use on mineral fibres in accordance with the invention, individual compatibilizers such as those listed above

may be dissolved in any suitable solvent for the compatibilizer in question, e.g. n-hexane, hexene or toluene, to produce solutions containing, e.g., about 30-35% by weight of the compatibilizer. Such solutions can then be applied to mineral fibres to be treated, for example by spraying, to result in mineral fibres with a compatibilizer coating sufficient to provide desired solubility characteristics. A suitable amount for this purpose is, e.g., a coating of about 1 % by weight of the compatibilizer based on the weight of the fibres.

The following fibres were prepared for testing as reinforcement of polypropylene:

| Ex. No. | Coupling agent,% (w/w) | Surfactant,% (w/w) | Fibre length/diam.(μm) |
|---|---|---|---|
| 1* | Dynasilane 1151, 0.180% | - | 200/4.3 |
| 2 | Mixil N50, 0.285% | Licomer W19, 1.00% | 300/4.3 |
| 3 | Mixil N50, 0.210% | Licomer W 19, 1.00 % | 300/4.3 |
| 4 | Mixil N50, 0.210% | Licomer W19, 0.50% | 300/4.3 |
| 5 | Mixil N50, 0.210% | Licomer W19, 0.25% | 300/4.3 |
| 6 | Mixil N50, 0.210% | - | 300/4.3 |
| 7 | Dynasilane 1372, 0.180% | Licomer W19, 0.50% | 450/7.2 |
| 8 | Dynasilane 1372, 0.225% | - | 300/4.3 |

* Comparative example: coupling agent not covalently bonded

**Preparation of mineral fibre-reinforced polypropylene**

Fibres prepared as described above were used to prepare mineral fibre-reinforced polypropylene (PP) raw materials, compounding on a 25 mm Berstorff ZE 2 compounding machine. The compounded PP was then used to prepare mineral fibre-reinforced PP samples by injection moulding, the mechanical properties of the PP samples being determined using standard ISO test methods. The samples comprised 30% by weight of the mineral fibres and 70% by weight of PP (of which 65% by weight was HD-120M from Borealis and 5% by weight was Exxelor PO 1015 TA from Exxon). The following mechanical properties were determined using the test methods indicated:

Tensile strength ($R_m$): ISO R 527
E-modulus: ISO R 527
Notched impact: ISO 180
Flexural Modulus: ISO 178

**Results**

| Example No. | 1 | 2 | 3 | 4 | 5 | 6 | 7 | 8 |
|---|---|---|---|---|---|---|---|---|
| Tensile strength, $R_m$ (MPa) | 52.32 | 51.30 | 42.24 | 62.70 | 67.44 | 61.46 | 57.66 | 62.00 |
| E-modulus (GPa) | 4.00 | 4.03 | 4.28 | 4.50 | 4.83 | 4.35 | 4.08 | 4.53 |
| Notched impact ($mJ/mm^2$) | 5.37 | 4.32 | 2.47 | 5.25 | 6.36 | 6.75 | 5.96 | 6.08 |
| Flex. Modulus (GPa) | 3.05 | 3.26 | 2.68 | 2.43 | 2.33 | 2.97 | 2.87 | 3.76 |

**Discussion of the results**

In the tests described above, those examples in which the fibres were produced using a surfactant (2-5 and 7) were "free-flowing", while those produced without the use of a surfactant (1, 6 and 8) were not "free-flowing". The discussion below will be based on the results for the tensile strength ($R_m$), since this is generally the most important test parameter.

Comparing Examples 2 and 3, it may be seen that the use of a larger amount of coupling agent (Example 2) resulted in a substantially increased tensile strength when the amount of surfactant was kept constant. Similarly, for fibres without a surfactant (Examples 1, 6 and 8) the use of a coupling agent which was covalently bonded to the fibres (Examples 6 and 8) resulted in an increase in tensile strength compared to a non-covalently bonded coupling agent (Example 1).

Examples 3-6 show the effect of varying the amount of surfactant with fibres carrying the same amount of bonded coupling agent. One observation that can be made based on these examples is that the use of an excessive amount of surfactant (Example 3) results in a tensife strength that is substantiatly reduced compared to corresponding fibres with no surfactant (Example 6). The best result in this series in terms of tensile strength was obtained using 0.25% of the surfactant (Example 5). In this case, it was possible to obtain the advantages of free-flowing fibres (dispersibility and easy handling), while at the same time obtaining an improved tensile strength compared to the fibres of Example 6 which contained no surfactant. A surfactant amount of 0.50% (Example 4) also resulted in a slight improvement in tensile strength compared to Example 6.

It can also be seen that the fibres of Example 7 (bonded coupling agent, surfactant amount 0.50%) resulted in an improved tensile strength over the fibres of Example 1 without a surfactant and with a non-bonded coupling agent. Compared to Example 7, the fibres of Example 8 (bonded Dynasilane 1372 coupling agent but no surfactant) had an improved tensile strength.

In summary, the results above show that use of a mineral fibre granulate according to the invention comprising coupling agent-treated fibres embedded in a surfactant results in advantages both in terms of the free-flowing nature of the fibres and in terms of an improvement in the tensile strength of composite materials of polypropylene reinforced with such fibres.

## Claims

1. A mineral fibre which is treated with a coupling agent, at least 30% by weight of said coupling agent at the surface of the fibre being bound to the fibre through chemical M-O-M bonds where M is Si, Ti or Zr, as determined by the Soxhlet toluene test method.

2. A mineral fibre according to claim 1, wherein the coupling agent is in the form of a compound, or a mixture of compounds, of the general formula I

$$(XO)_3\text{-M-Y} \qquad \text{(I)}$$

wherein each X independently is a group selected from hydrogen, $C_{1-6}$-alkyl, $C_{2-6}$-alkenyl, $C_{2-6}$-alkynyl, phenyl or benzyl where each phenyl and benzyl group may be optionally substituted with one or more substituents selected from nitro, halogen, amino, hydroxy, $C_{1-6}$-alkyl, $C_{2-6}$-alkenyl, $C_{2-6}$-alkynyl, $C_{1-6}$-alkoxy, and M is Si, Ti or Zr;
Y is a group of the general formula II

$$-(CR^1R^2)_i\text{-}Y^1 \qquad \text{(II)}$$

wherein each $R^1$ and $R^2$ independently designate a group selected from hydrogen, $C_{1-6}$-alkyl, $C_{2-6}$-alkenyl, $C_{2-6}$-alkynyl, aryl, ar-$C_{1-6}$-alkyl, ar-$C_{2-6}$-alkenyl, $C_{1-6}$-alkoxy, $C_{2-6}$-alkenyloxy, aryloxy, $C_{1-6}$-alkylcarbonyl, and mono- and di($C_{1-6}$amino, which may be optionally substituted with one or more substituents selected from halogen, nitro, amino, and hydroxy, i is an integer in the range from 1 to 20, and $Y^1$ designates hydrogen, $-NH_2$, $-CONH_2$, -COOH, $-SO_3H$, $-M(OX)_3$ or a group of the general formula III

$$[-A_j\text{-}(CR^3R^4)_{k(j)}]_j\text{-}Y^2 \qquad \text{(III)}$$

where the segment set number j is an integer in the range from 1 to 10, and each k(j) is an integer in the range from 1 to 20, $A_j$ within each segment set is a group selected from -NH-, $-NR^A$-,$-N^+(R^BR^C)$-, -O-, -S-, -C(O)-, -O-C(O)-, -C(O)-O-,-C(O)-NH- and -NH-C(O)-, each $R^3$ and $R^4$ independently can designate any of the groups mentioned above for $R^1$ and $R^2$, and each of $R^A$, $R^B$, and $R^C$ independently can designate any of the groups mentioned above for $R^1$ and $R^2$, and $Y^2$ designates hydrogen, $-NH_2$, $-CONH_2$, -COOH, $-SO_3H$, $-M(OX)_3$,
or
Y is a group of the general formula IV

$$-O[-M(OX)(Z)\text{-}O\text{-}M(OX)(Z)\text{-}O]_m\text{-}M(OX)_p(Z)_r \qquad \text{(IV)}$$

wherein M and X are as defined above, m is an integer in the range from 1 to 20, p and r are each 0, 1, 2, or 3 with the proviso that p+r must always equal 3, each Z independently designates a group of the general formula V

$$-(CR^5R^6)_n\text{-}Y^1 \qquad \text{(V)}$$

wherein n is an integer from 1 to 20, each $R^5$ and $R^6$ independently can designate any of the groups mentioned above for $R^1$ and $R^2$, and $Y^1$ is a group as defined above,
or salts thereof.

**3.** A mineral fibre according to claim 2, in which M is Si, and X is methyl, ethyl or propyl.

**4.** A mineral fibre according to claim 2 or 3 coated with 0.01-5% by weight of the fibre of the coupling agent.

**5.** A mineral fibre according to claim 1, wherein at least 50% by weight of the coupling agent at the surface of the fibre is covalently bound to the fibre.

**6.** A mineral fibre according to any of the preceding claims, wherein the coupling agent is selected from the group consisting of:

$(XO)_3Si-(CH_2)_x-NH_2$, where $2 \leq x \leq 7$;
$(XO)_3Si-(CH_2)_x-NH-(CH_2)_y-NH_2$, where $2 \leq x \leq 7$ and $2 \leq y \leq 5$;
$(XO)_3Si-(CH_2)_x-NH-(CH_2)_y-NH-(CH_2)_z-NH_2$, where $2 \leq x \leq 7$, $2 \leq y \leq 5$ and $2 \leq z \leq 5$;
$(XO)_3Si-(CH_2)_x-N^+(CH_3)_2-(CH_2)_y-CH_3 \cdot Cl^-$, where $2 \leq x \leq 7$ and $1 \leq y \leq 20$;
$(XO)_3Si-(CH_2)_x-CONH_2$, where $2 \leq x \leq 10$;
$(XO)_3Si-(CH_2)_x-NH-(CH_2)_y-CONH_2$, where $2 \leq x \leq 10$ and $2 \leq y \leq 5$;
$(XO)_3Si-(CH_2)_x-NH-(CH_2)_x-Si(OX)_3$, where $2 \leq x \leq 7$;
$(XO)_3Si-(CH_2)_x-NH-(CH_2)_y-{}^+N(CH_3)_2-(CH_2)_z-C_6H_5 \cdot Cl^-$, where $2 \leq x \leq 7$, $2 \leq y \leq 5$ and $0 \leq z \leq 5$;
$(XO)_3Si-(CH_2)_x-NH-(CH_2)_y-{}^+N(CH_3)_2-(CH_2)_z-C_6H_4(C_2H_3) \cdot Cl^-$, where $2 \leq x \leq 7$, $2 \leq y \leq 5$ and $0 \leq z \leq 5$;
$(XO)_3Si-(CH_2)_x-CH=CH_2$, where $2 \leq x \leq 10$;
$(OX)_3-Si-O[-Si(OX)(Z)-O-Si(OX)(Z)-O]_m-Si(Z)(OX)_2$, where $2 \leq m \leq 12$, and Z is selected from the group consisting of:

- $(CH_2)_x-NH-(CH_2)_y-{}^+N(CH_3)_2-(CH_2)_z-C_6H_4(C_2H_3) \cdot Cl^-$, where $2 \leq x \leq 7$, $2 \leq y \leq 5$ and $0 \leq z \leq 5$;
- $(CH_2)_x-NH-(CH_2)_y-{}^+N(CH_3)_2-(CH_2)_z-C_6H_5 \cdot Cl^-$, where $2 \leq x \leq 7$, $2 \leq y \leq 5$ and $0 \leq z \leq 5$;
- $(CH_2)_x-CH=CH_2$, where $2 \leq x \leq 10$;
- $(CH_2)_x-CONH_2$, where $2 \leq x \leq 10$;
- $(CH_2)_x-NH-(CH_2)_y-CONH_2$, where $2 \leq x \leq 10$, and $2 \leq y \leq 5$;
- $(CH_2)_x-N^+(CH_3)_2-(CH_2)_y-CH_3 \cdot Cl^-$, where $2 \leq x \leq 7$ and $1 \leq y \leq 20$;
- $(CH_2)_x-NH_2$, where $2 \leq x \leq 7$;
- $(CH_2)_x-NH-(CH_2)_y-NH_2$, where $2 \leq x \leq 7$ and $2 \leq y \leq 5$;
- $(CH_2)_x-NH-(CH_2)y-NH-(CH_2)_z-NH_2$, where $2 \leq x \leq 7$ $2 \leq y \leq 5$ and $2 \leq z \leq 5$;

wherein X is methyl, ethyl or propyl;
and mixtures thereof;

**7.** A mineral fibre granulate comprising mineral fibres according to any of claims 1-6, wherein the mineral fibres are coated with or embedded in a compatibilizer or wetting agent; said compatibilizer being a chemically reactive surfactant which is able to react with groups on the mineral fibre surface, the compatibilizer having a first moiety capable of interacting with the coupling agent-carrying mineral fibres such that the coupling agent-carrying mineral fibres are readily able to be mixed with the compatibilizer, and a second moiety capable of interacting with a thermoplastic or thermosetting polymer such that the compatibilizer, via its second moiety, is readily able to become mixed in the polymer; said wetting agent being non-chemically reactive towards the mineral fibres.

**8.** A mineral fibre granulate according to claim 7, wherein the wetting agent is selected from polyethylene oxide, polypropylene oxide and derivatives thereof.

**9.** A mineral fibre granulate according to claim 7 or 8, wherein a sphere of radius $r_1$ for the Hansen d, p and h solubility parameters of the first moiety of the compatibilizer overlaps a sphere of radius r' for the Hansen d, p and h solubility parameters of exposed groups of the coupling agent, and wherein a sphere of radius $r_2$ for the Hansen d, p and h solubility parameters of the second moiety of the compatibilizer overlaps a sphere of radius r" for the Hansen d, p and h solubility parameters of the polymer.

**10.** A mineral fibre granulate according to any of claims 7-9, wherein the Relative Energy Difference number of the first moiety of the compatibilizer and exposed groups of the coupling agent is less than about 1.0, and wherein the Relative Energy Difference number of the second moiety of the compatibilizer and the polymer is less than about 1.0.

**11.** A mineral fibre granulate according to any of claims 7-10, wherein the compatibilizer is selected from nonionic, cationic and anionic surfactants with a molecular weight in the range of 1000-25,000.

**12.** A mineral fibre granulate according to claim 11, wherein the surfactant is modified with one or more reactive groups selected from maleic acid, maleic anhydride, malonic acid and malonic ester groups, and other carboxylic acid and anhydride groups.

**13.** A free-flowing mineral fibre granulate suitable for the reinforcement of thermoplastic or thermosetting materials, said granulate comprising mineral fibres according to any of claims 1-6 and which are coated with or embedded in a compatibilizer or wetting agent, the mineral fibre granulate being able to flow in a mass flow pattern out of a model silo having stainless steel walls with a round hopper, a hopper angle of 30° and a hopper opening diameter of 20 cm.

**14.** A free-flowing mineral fibre granulate according to claim 13, wherein the mineral fibre granulate is able to flow in a mass flow pattern out of a model silo having stainless steel walls with a round hopper, a hopper angle of 30°, and a hopper opening diameter of 15 cm.

**15.** A free-flowing mineral fibre granulate according to claim 13 or 14, wherein:

a) the mineral fibre granulate contains less than 10% by weight of loose mineral fibres, where the amount of loose fibre is determined by drying a sample of the granulate at a temperature of 105°C, and then sieving of the loose fibres using sieves with openings of 1400 $\mu$m and 600 $\mu$m, the loose fibres being those falling through both sieves; and/or
b) the bulk density of the mineral fibre granulate is greater than 300 g/l.

**16.** A free-flowing mineral fibre granulate according to claim 15, wherein:

a) the mineral fibre granulate contains less than 5% by weight of loose mineral fibres; and/or
b) the bulk density of the mineral fibre granulate is greater than 350 g/l.

**17.** A free-flowing mineral fibre granulate according to any of claims 13-16, wherein the mineral fibre granulate is as defined in any of the claims 7-12.

**18.** A thermoplastic granulate suitable for moulding, comprising granules of a thermoplastic material with a compatibilizer or wetting agent and coupling agent-carrying mineral fibres according to any of claims 1-6 distributed therein, the compatibilizer or wetting agent serving to enhance dispersibility of the mineral fibres in the thermoplastic material to result in a substantially uniform distribution and substantially random orientation of the mineral fibres in the thermoplastic material.

**19.** A thermoplastic granulate according to claim 18 comprising a thermoplastic material selected from polyolefins, including polypropylene, polyethylene and copolymers thereof, polyamides, polyurethanes, polyesters, vinyls, including polyvinyl chloride (PVC), acrylics, styrenes, polycarbonates, polyimides and ABS materials.

**20.** A thermoplastic granulate according to claim 19, wherein the thermoplastic polymer is a ,polypropylene (reference: HD-120M from Borealis) and wherein the granulate, when moulded into a standard test sample containing 30% by weight of the mineral fibres and tested according to ISO R 527, has a tensile strength of at least about 55 MPa.

**21.** A thermoplastic granulate according to any of claims 18-20, wherein the compatibilizer is as defined in claim 11 or 12 and/or the wetting agent is as defined in claim 8.

**22.** A shaped article comprising a reinforced thermoplastic material prepared from a thermoplastic granulate according to any of claims 18-21.

**23.** A shaped article comprising a reinforced thermoplastic or thermosetting material and, substantially uniformly distributed in one or more domains of the thermoplastic or thermosetting material, reinforcing mineral fibres according

to any of claims 1-6.

**24.** A process for producing mineral fibres according to any of claims 1-6, comprising spinning mineral fibres and applying to the hot spun fibres 0.01-5% by weight, based on the weight of the fibres, of a coupling agent solution.

**25.** A process according to claim 24 wherein the coupling agent is applied as an aqueous solution having a pH in the range of about 2-5 or in the range of about 8-11.

**26.** A process according to claim 24 or 25 wherein the coupling agent is sprayed onto hot spun mineral fibres having a temperature in the range of about 400-800°C.

**27.** A process for producing a mineral fibre granulate, comprising mixing and rolling the spun mineral fibres prepared according to any of claims 24-26 with a compatibilizer or wetting agent, wherein the compatibilizer is a chemically reactive surfactant which is able to react with groups on the mineral fibre surface, and the wetting agent is non-chemically reactive towards the mineral fibres, and drying the mixture to result in a granulate capable of flowing in a mass flow pattern, said granulate comprising mineral fibres embedded in the compatibilizer or wetting agent.

## Patentansprüche

**1.** Mineralfaser, die mit einem Kupplungsmittel behandelt ist, wobei mindestens 30 Gew.-% des Kupplungsmittels über chemische M-O-M-Bindungen auf der Oberfläche der Faser gebunden sind, wobei M Si, Ti oder Zr ist, was mittels des Soxhlet-Toluol-Testverfahrens ermittelt wird.

**2.** Mineralfaser nach Anspruch 1, wobei das Kupplungsmittel in Form einer Verbindung oder einer Mischung von Verbindungen der allgemeinen Formel I vorliegt

$$(XO)_3\text{-M-Y} \qquad \text{(I)}$$

wobei jedes X unabhängig eine Gruppe ist, ausgewählt aus Wasserstoff, $C_{1-6}$-Alkyl, $C_{2-6}$-Alkenyl, $C_{2-6}$-Alkinyl, Phenyl oder Benzyl, wobei jede Phenyl- und Benzylgruppe fakultativ mit einem oder mehreren Substituenten substituiert ist, ausgewählt aus Nitro, Halogen, Amino, Hydroxy, $C_{1-6}$-Alkyl, $C_{2-6}$-Alkenyl, $C_{2-6}$-Alkinyl, $C_{1-6}$-Alkoxy, und M Si, Ti oder Zr ist;
Y eine Gruppe der allgemeinen Formel II ist

$$\text{-}(CR^1R^2)_i\text{-}Y^1 \qquad \text{(II)}$$

wobei jedes $R^1$ und $R^2$ unabhängig eine Gruppe darstellt, ausgewählt aus Wasserstoff, $C_{1-6}$-Alkyl, $C_{2-6}$-Alkenyl, $C_{2-6}$-Alkinyl, Aryl, Ar-$C_{1-6}$-Alkyl, Ar-$C_{2-6}$-Alkenyl, $C_{1-6}$-Alkoxy, $C_{2-6}$-Alkenyloxy, Aryloxy, $C_{1-6}$-Alkylcarbonyl und Mono- und Di($C_{1-6}$)amino, die fakultativ mit einem oder mehreren Substituenten substituiert ist, ausgewählt aus Halogen, Nitro, Amino und Hydroxy, i eine ganze Zahl im Bereich von 1 bis 20 ist und $Y^1$ Wasserstoff, -$NH_2$, -$CONH_2$, -COOH, -$SO_3H$,-$M(OX)_3$ oder eine Gruppe der allgemeinen Formel III darstellt

$$[\text{-}A_j\text{-}(CR^3R^4)_{k(j)}]_j\text{-}Y^2 \qquad \text{(III)}$$

wobei die Segmentmengenanzahl j eine ganze Zahl im Bereich von 1 bis 10 ist, und jedes k(j) eine ganze Zahl im Bereich von 1 bis 20 ist, $A_j$ innerhalb jedes Segmentsets eine Gruppe ist, ausgewählt aus -NH-, -$NR^A$-,-$N^+(R^BR^C)$-, -O-, -S-, -C(O)-, -O-C(O)-, -C(O)-O-, -C(O)-NH- und -NH-C(O)-, wobei jedes $R^3$ und $R^4$ unabhängig jede der vorstehend für $R^1$ und $R^2$ genannten Gruppen darstellen kann, und wobei jedes $R^A$, $R^B$ und $R^C$ unabhängig jede der vorstehend für $R^1$ und $R^2$ genannten Gruppen darstellen kann und $Y^2$ Wasserstoff, -$NH_2$, -$CONH_2$, -COOH, -$SO_3H$, -$M(OX)_3$ darstellt,
oder
Y eine Gruppe der allgemeinen Formel IV ist

$$\text{-O[-M(OX)(Z)-O-M(OX)(Z)-O]}_m\text{-M(OX)}_p(Z)_r \qquad \text{(IV)}$$

wobei M und X wie vorstehend definiert sind, m eine ganze Zahl im Bereich von 1 bis 20 ist, p und r jeweils 0, 1, 2 oder 3 sind, mit der Maßgabe, dass p+r immer gleich 3 sein muss, wobei jedes Z unabhängig eine Gruppe der

allgemeinen Formel V darstellt

$$-(CR^5R^6)_n-Y^1 \qquad (V)$$

wobei n eine ganze Zahl von 1 bis 20 ist, jedes $R^5$ und $R^6$ unabhängig jede der vorstehend für $R^1$ und $R^2$ genannten Gruppen darstellen kann und $Y^1$ eine wie vorstehend definierte Gruppe ist,
oder Salze davon.

3. Mineralfaser nach Anspruch 2, wobei M Si ist und X Methyl, Ethyl oder Propyl ist.

4. Mineralfaser nach Anspruch 2 oder 3, beschichtet mit 0,01-5 Gew.-% des Kupplungsmittels bezogen auf die Faser.

5. Mineralfaser nach Anspruch 1, wobei mindestens 50 Gew.-% des Kupplungsmittels auf der Oberfläche der Faser kovalent an die Faser gebunden sind.

6. Mineralfaser nach einem der vorhergehenden Ansprüche, wobei das Kupplungsmittel ausgewählt ist aus der Gruppe, bestehend aus:

$(XO)_3Si-(CH_2)_x-NH_2$, wobei $2 \leq x \leq 7$;
$(XO)_3Si-(CH_2)_x-NH-(CH_2)_y-NH_2$, wobei $2 \leq x \leq 7$ und $2 \leq y \leq 5$;
$(XO)_3Si-(CH_2)_x-NH-(CH_2)y-NH-(CH_2)_z-NH_2$, wobei $2 \leq x \leq 7$, $2 \leq y \leq 5$ und $2 \leq z \leq 5$;
$(XO)_3Si-(CH_2)_x-N^+(CH_3)_2-(CH_2)_y-CH_3 \cdot Cl^-$, wobei $2 \leq x \leq 7$ und $1 \leq y \leq 20$;
$(XO)_3Si-(CH_2)_x-CONH_2$, wobei $2 \leq x \leq 10$;
$(XO)_3Si-(CH_2)_x-NH-(CH_2)_y-CONH_2$, wobei $2 \leq x \leq 10$ und $2 \leq y \leq 5$;
$(XO)_3Si-(CH_2)_x-NH-(CH_2)_x-Si(OX)_3$, wobei $2 \leq x \leq 7$;
$(XO)_3Si-(CH_2)_x-NH-(CH_2)_y-{}^+N(CH_3)_2-(CH_2)_z-C_6H_5 \cdot Cl$-, wobei $2 \leq x \leq 7$, $2 \leq y \leq 5$ und $0 \leq z \leq 5$;
$(XO)_3Si-(CH_2)_x-NH-(CH_2)_y-{}^+N(CH_3)_2-(CH_2)_z-C_6H_4(C_2H_3) \cdot Cl^-$, wobei $2 \leq x \leq 7$, $2 \leq y \leq 5$ und $0 \leq z \leq 5$;
$(XO)_3Si-(CH_2)_x-CH=CH_2$, wobei $2 \leq x \leq 10$;
$(OX)_3-Si-O[-Si(OX)(Z)-O-Si(OX)(Z)-O]_m-Si(Z)(OX)_2$, wobei $2 \leq m \leq 12$, und Z ausgewählt ist aus der Gruppe, bestehend aus:

- $(CH_2)_x-NH-(CH_2)_y-{}^+N(CH_3)_2-(CH_2)_z-C_6H_4(C_2H_3) \cdot Cl^-$, wobei $2 \leq x \leq 7$, $2 \leq y \leq 5$ und $0 \leq z \leq 5$;
- $(CH_2)_x-NH-(CH_2)_y-{}^+N(CH_3)_2-(CH_2)_z-C_6H_5 \cdot Cl^-$, wobei $2 \leq x \leq 7$, $2 \leq y \leq 5$ und $0 \leq z \leq 5$;
- $(CH_2)_x-CH=CH_2$, wobei $2 \leq x \leq 10$;
- $(CH_2)_x-CONH_2$, wobei $2 \leq x \leq 10$;
- $(CH_2)_x-NH-(CH_2)_y-CONH_2$, wobei $2 \leq x \leq 10$ und $2 \leq y \leq 5$;
- $(CH_2)_x-N^+(CH_3)_2-(CH_2)_y-CH_3 \cdot Cl^-$, wobei $2 \leq x \leq 7$ und $1 \leq y \leq 20$;
- $(CH_2)_x-NH_2$, wobei $2 \leq x \leq 7$;
- $(CH_2)_x-NH-(CH_2)_y-NH_2$, wobei $2 \leq x \leq 7$ und $2 \leq y \leq 5$;
- $(CH_2)_x-NH-(CH_2)_y-NH-(CH_2)_z-NH_2$, wobei $2 \leq x \leq 7$ $2 \leq y \leq 5$ und $2 \leq z \leq 5$;

wobei X Methyl, Ethyl oder Propyl ist;
und Mischungen davon.

7. Mineralfasergranulat, umfassend Mineralfasern nach einem der Ansprüche 1-6, wobei die Mineralfasern mit einem Verträglichkeitsvermittler oder Benetzungsmittel beschichtet oder darin eingebettet sind; wobei der Verträglichkeitsvermittler ein chemisch reaktives Tensid ist, das mit Gruppen auf der Mineralfaseroberfläche reagieren kann, wobei der Verträglichkeitsvermittler eine erste Gruppierung aufweist, die mit den das Kupplungsmittel tragenden Mineralfasern derart in Wechselwirkung treten kann, dass sich die das Kupplungsmittel tragenden Mineralfasern einfach mit dem Verträglichkeitsvermittler vermischen lassen, sowie eine zweite Gruppierung, die mit einem thermoplastischen oder duroplastischen Polymer derart in Wechselwirkung treten kann, dass sich der Verträglichkeitsvermittler über seine zweite Gruppierung einfach mit dem Polymer vermischen lässt; wobei das Benetzungsmittel chemisch nicht mit den Mineralfasern reagiert.

8. Mineralfasergranulat nach Anspruch 7, wobei das Benetzungsmittel ausgewählt ist aus Polyethylenoxid, Polypropylenoxid und Derivaten davon.

**9.** Mineralfasergranulat nach Anspruch 7 oder 8, wobei eine Kugel mit dem Radius $r_1$ der Hansen Löslichkeitsparameter d, p und h der ersten Gruppierung des Verträglichkeitsvermittlers mit einer Kugel mit dem Radius r' der Hansen Löslichkeitsparameter d, p und h der exponierten Gruppen des Kupplungsmittels überlappt und wobei eine Kugel mit dem Radius $r_2$ der Hansen Löslichkeitsparameter d, p und h der zweiten Gruppierung des Verträglichkeitsvermittlers mit einer Kugel mit dem Radius r" der Hansen Löslichkeitsparameter d, p und h der Löslichkeitsparameter des Polymers überlappt.

**10.** Mineralfasergranulat nach einem der Ansprüche 7-9, wobei die Zahl für die relative Energiedifferenz der ersten Gruppierung des Verträglichkeitsvermittlers und der exponierten Gruppen des Kupplungsmittels kleiner ist als etwa 1,0, und wobei die Zahl für die relative Energiedifferenz der zweiten Gruppierung des Verträglichkeitsvermittlers und des Polymers kleiner ist als etwa 1,0.

**11.** Mineralfasergranulat nach einem der Ansprüche 7-10, wobei der Verträglichkeitsvermittler ausgewählt ist aus nichtionischen, kationischen und anionischen Tensiden mit einem Molekulargewicht im Bereich von 1000 bis 25.000.

**12.** Mineralfasergranulat nach Anspruch 11, wobei das Tensid mit einer oder mehreren reaktiven Gruppen modifiziert ist, ausgewählt aus Maleinsäure-, Maleinsäureanhydrid-, Malonsäure- und Malonestergruppen und anderen Carbonsäure- und Carbonsäureanhydridgruppen.

**13.** Rieselfähiges Mineralfasergranulat zum Verstärken von thermoplastischen und duroplastischen Materialien, wobei das Granulat Mineralfasern nach einem der Ansprüche 1-6 umfasst und die mit einem Verträglichkeitsvermittler oder Benetzungsmittel beschichtet oder darin eingebettet sind, wobei das Mineralfasergranulat aus einem Modellsilo mit Edelstahlwänden mit einem runden Trichter, einem Trichterwinkel von 30° und einem Öffnungsdurchmesser des Trichters von 20 cm in einem Massenflussmuster fließen kann.

**14.** Rieselfähiges Mineralfasergranulat nach Anspruch 13, wobei das Mineralfasergranulat aus einem Modellsilo mit Edelstahlwänden mit einem runden Trichter, einem Trichterwinkel von 30° und einem Öffnungsdurchmesser des Trichters von 15 cm in einem Massenflussmuster fließen kann.

**15.** Rieselfähiges Mineralfasergranulat nach Anspruch 13 oder 14, wobei:

a) das Mineralfasergranulat weniger als 10 Gew.-% lose Mineralfasern enthält, wobei die Menge der losen Fasern durch Trocknen einer Probe des Granulats bei einer Temperatur von 105 °C und anschließendes Sieben der losen Fasern mit Sieben mit einer Maschenweite von 1400 $\mu$m und 600 $\mu$m bestimmt wird, wobei nur die losen Fasern durch beide Siebe fallen; und/oder
b) die Schüttdichte des Mineralfasergranulats größer ist als 300 g/l.

**16.** Rieselfähiges Mineralfasergranulat nach Anspruch 15, wobei:

a) das Mineralfasergranulat weniger als 5 Gew.-% lose Mineralfasern enthält; und/oder
b) die Schüttdichte des Mineralfasergranulats größer ist als 350 g/l.

**17.** Rieselfähiges Mineralfasergranulat nach einem der Ansprüche 13-16, wobei das Mineralfasergranulat wie in den Ansprüchen 7-12 definiert ist.

**18.** Thermoplastisches Granulat, geeignet zum Formen, umfassend Körner aus einem thermoplastischen Material mit einem Verträglichkeitsvermittler oder Benetzungsmittel und darin verteilt ein Kupplungsmittel tragende Mineralfasern nach einem der Ansprüche 1-6, wobei der Verträglichkeitsvermittler oder das Benetzungsmittel zur Verbesserung der Dispergierbarkeit der Mineralfasern in dem thermoplastischen Material dienen, was zu einer im Wesentlichen einheitlichen Verteilung und einer im Wesentlichen willkürlichen Ausrichtung der der Mineralfasern in dem thermoplastischen Material führt.

**19.** Thermoplastisches Granulat nach Anspruch 18, umfassend ein thermoplastisches Material, ausgewählt aus Polyolefinen, einschließlich Polypropylen, Polyethylen und Copolymeren davon, Polyamiden, Polyurethanen, Polyestern, Vinylen, einschließlich Polyvinylchlorid (PVC), Acrylen, Styrolen, Polycarbonaten, Polyimiden und ABS-Materialien.

**20.** Thermoplastisches Granulat nach Anspruch 19, wobei das thermoplastische Polymer ein Polypropylen ist (Verweis: HD-120M von Borealis) und wobei das Granulat, wenn es in Standardprüflingen mit 30 Gew.-% der Mineralfasern

geformt und nach ISO R 527 geprüft wird, eine Zugfestigkeit von mindestens etwa 55 MPa aufweist.

**21.** Thermoplastisches Granulat nach einem der Ansprüche 18-20, wobei der Verträglichkeitsvermittler wie in Anspruch 11 oder 12 definiert ist und/oder das Benetzungsmittel wie in Anspruch 8 definiert ist.

**22.** Geformter Artikel, umfassend ein verstärktes thermoplastisches Material, hergestellt aus einem thermoplastischen Granulat nach einem der Ansprüche 18-21.

**23.** Geformter Artikel, umfassend ein verstärktes thermoplastisches oder duroplastisches Material sowie im Wesentlichen einheitlich in einer oder mehreren Domänen des thermoplastischen oder duroplastischen Materials verteilte verstärkende Mineralfasern nach einem der Ansprüche 1-6.

**24.** Verfahren zur Herstellung von Mineralfasern nach einem der Ansprüche 1-6, umfassend das Spinnen von Mineralfasern und das Auftragen von 0,01-5 Gew.-% bezogen auf das Gewicht der Fasern einer Kupplungsmittellösung auf die heiß gesponnenen Fasern.

**25.** Verfahren nach Anspruch 24, wobei das Kupplungsmittel als wässrige Lösung mit einem pH-Wert im Bereich von etwa 2-5 oder im Bereich von etwa 8-11 aufgetragen wird.

**26.** Verfahren nach Anspruch 24 oder 25, wobei das Kupplungsmittel auf die heiß gesponnenen Mineralfasern, die eine Temperatur im Bereich von 400-800 °C haben, gesprüht wird.

**27.** Verfahren zur Herstellung eines Mineralfasergranulats, umfassend das Mischen und Rollen der nach einem der Ansprüche 24-26 vorbereiteten gesponnenen Mineralfasern mit einem Verträglichkeitsvermittler oder einem Benetzungsmittel, wobei der Verträglichkeitsvermittler ein chemisch reaktives Tensid ist, das mit Gruppen auf der Mineralfaseroberfläche reagieren kann, und das Benetzungsmittel gegenüber den Mineralfasern chemisch nicht reaktiv ist, und Trocknen der Mischung, was ein Granulat ergibt, das in einem Massenflussmuster fließen kann, wobei das Granulat in den Verträglichkeitsvermittler oder das Benetzungsmittel eingebettete Mineralfasern umfasst.

## Revendications

**1.** Fibre minérale traitée avec un agent de pontage, au moins 30% en poids dudit agent de pontage à la surface de la fibre étant lié à la fibre par des liaisons chimiques M-O-M où M est Si, Ti ou Zr, tel que déterminé par la méthode d'essai au toluène Soxhlet.

**2.** Fibre minérale selon la revendication 1, dans laquelle l'agent de pontage se présente sous la forme d'un composé, ou d'un mélange de composés, de formule générale I

$$(XO)_3\text{-M-Y} \qquad (I)$$

dans laquelle chaque X, pris indépendamment, est un groupe choisi parmi hydrogène, $C_{1-6}$-alkyle, $C_{2-6}$-alcényle, $C_{2-6}$-alcynyle, phényle ou benzyle, où chaque groupe phényle et benzyle peut éventuellement être substitué par un ou plusieurs substituants choisis parmi nitro, halogène, amino, hydroxy, $C_{1-6}$-alkyle, $C_{2-6}$-alcényle, $C_{2-6}$-alcynyle, $C_{1-6}$-alkoxy, et M est Si, Ti ou Zr ;
Y est un groupe de formule générale II

$$\text{-}(CR^1R^2)_i\text{-}Y^1 \qquad (II)$$

dans laquelle chaque $R^1$ et $R^2$, pris indépendamment, désigne un groupe choisi parmi hydrogène, $C_{1-6}$-alkyle, $C_{2-6}$-alcényle, $C_{2-6}$-alcynyle, aryle, ar-$C_{1-6}$-alkyle, ar-$C_{2-6}$-alcényle, $C_{1-6}$-alkoxy, $C_{2-6}$-alcényloxy, aryloxy, $C_{1-6}$-alkylcarbonyle, et mono- et di($C_{1-6}$)amino, qui peut éventuellement être substitué par un ou plusieurs substituants choisis parmi halogène, nitro, amino et hydroxy, i est un entier de 1 à 20, et $Y^1$ désigne hydrogène, $-NH_2$, $-CONH_2$, -COOH, $-SO_3H$, $-M(OX)_3$ ou un groupe de formule générale III

$$[\text{-}A_j\text{-}(CR^3R^4)_{k(j)}]_j\text{-}Y^2 \qquad (III)$$

dans laquelle le nombre j d'ensemble de segments est un entier de 1 à 10, et chaque k(j) est un entier de 1 à 20,

$A_j$ dans chaque ensemble de segment est un groupe choisi parmi -NH-, $-NR^A-$, $-N^+(R^BR^C)-$, -O-, -S-, -C(O)-, -O-C(O)-, -C(O)-O-, -C(O)-NH- et -NH-C(O)-, chaque $R^3$ et $R^4$, pris indépendamment, peut désigner l'un quelconque des groupes mentionnés ci-dessus pour $R^1$ et $R^2$, et chaque $R^A$, $R^B$ et $R^C$ peut désigner indépendamment l'un quelconque des groupes mentionnés ci-dessus pour $R^1$ et $R^2$, et $Y^2$ désigne hydrogène, $-NH_2$, $-CONH_2$, -COOH, $-SO_3H$,$-M(OX)_3$,
ou
Y est un groupe de formule générale IV

$$-O[-M(OX)(Z)-O-M(OX)(Z)-O]_m-M(OX)_p(Z)_r \quad (IV)$$

dans laquelle M et X sont tels que définis ci-dessus, m est un entier de 1 à 20, p et r sont chacun 0, 1, 2 ou 3 à condition que p+r soit toujours égal à 3, chaque Z, pris indépendamment, désigne un groupe de formule générale V

$$-(CR^5R^6)_n-Y^1 \quad (V)$$

dans laquelle n est un entier de 1 à 20, chaque $R^5$ et $R^6$, pris indépendamment, peut désigner l'un quelconque des groupes mentionnés ci-dessus pour $R^1$ et $R^2$, et $Y^1$ est un groupe tel que défini ci-dessus,
ou des sels de ceux-ci.

3. Fibre minérale selon la revendication 2, dans laquelle M est Si, et X est méthyle, éthyle ou propyle.

4. Fibre minérale selon la revendication 2 ou 3 revêtue de 0,01 à 5% d'agent de pontage en poids de la fibre.

5. Fibre minérale selon la revendication 1, dans laquelle au moins 50% en poids de l'agent de pontage à la surface de la fibre est lié de façon covalente à la fibre.

6. Fibre minérale selon l'une quelconque des revendications précédentes, dans laquelle l'agent de pontage est choisi dans le groupe consistant en :

$(XO)_3Si-(CH_2)x-NH_2$, où $2 \le x \le 7$ ;
$(XO)_3Si-(CH_2)_x-NH-(CH_2)y-NH_2$, où $2 \le x \le 7$ et $2 \le y \le 5$ ;
$(XO)_3Si-(CH_2)_x-NH-(CH_2)_y-NH-(CH_2)_z-NH_2$, où $2 \le x \le 7$, $2 \le y \le 5$ et $2 \le z \le 5$ ;
$(XO)_3Si-(CH_2)_x-N^+(CH_3)_2-(CH_2)_y-CH_3 \cdot Cl^-$, où $2 \le x \le 7$ et $1 \le y \le 20$ ;
$(XO)_3Si-(CH_2)_x-CONH_2$, où $2 \le x \le 10$ ;
$(XO)_3Si-(CH_2)_x-NH-(CH_2)_y-CONH_2$, où $2 \le x \le 10$ et $2 \le y \le 5$ ;
$(XO)_3Si-(CH_2)_x-NH-(CH_2)_x-Si(OX)_3$, où $2 \le x \le 7$ ;
$(XO)_3Si-(CH_2)_x-NH-(CH_2)_y-{}^+N(CH_3)_2-(CH_2)_z-C_6H_5 \cdot Cl^-$, où $2 \le x \le 7$, $2 \le y \le 5$ et $0 \le z \le 5$ ;
$(XO)_3Si-(CH_2)_x-NH-(CH_2)_y-{}^+N(CH_3)_2-(CH_2)_z-C_6H_4(C_2H_3) \cdot Cl^-$, où $2 \le x \le 7$, $2 \le y \le 5$ et $0 \le z \le 5$ ;
$(XO)_3Si-(CH_2)_x-CH=CH_2$, où $2 \le x \le 10$ ;
$(OX)_3-Si-O[-Si(OX)(Z)-O-Si(OX)(Z)-O]_m-Si(Z)(OX)_2$, où $2 \le m \le 12$, et Z est choisi dans le groupe consistant en :

- $(CH_2)_x-NH-(CH_2)_y-{}^+N(CH_3)_2-(CH_2)_z-C_6H_4(C_2H_3) \cdot Cl^-$, où $2 \le x \le 7$, $2 \le y \le 5$ et $0 \le z \le 5$ ;
- $(CH_2)_x-NH-(CH_2)_y-{}^+N(CH_3)_2-(CH_2)_z-C_6H_5 \cdot Cl^-$, où $2 \le x \le 7$, $2 \le y \le 5$ et $0 \le z \le 5$ ;
- $(CH_2)_x-CH=CH_2$, où $2 \le x \le 10$ ;
- $(CH_2)_x-CONH_2$, où $2 \le x \le 10$ ;
- $(CH_2)_x-NH-(CH_2)_y-CONH_2$, où $2 \le x \le 10$, et $2 \le y \le 5$ ;
- $(CH_2)_x-N^+(CH_3)_2-(CH_2)_y-CH_3 \cdot Cl^-$, où $2 \le x \le 7$ et $1 \le y \le 20$ ;
- $(CH_2)_x-NH_2$, où $2 \le x \le 7$ ;
- $(CH_2)_x-NH-(CH_2)_y-NH_2$, où $2 \le x \le 7$ et $2 \le y \le 5$ ;
- $(CH_2)_x-NH-(CH_2)_y-NH-(CH_2)_z-NH_2$, où $2 \le x \le 7$ $2 \le y \le 5$ et $2 \le z \le 5$ ;

dans lesquels X est méthyle, éthyle ou propyle ;
et des mélanges de ceux-ci.

7. Granulé de fibres minérales comprenant des fibres minérales selon l'une quelconque des revendications 1 à 6, dans lequel les fibres minérales sont revêtues de ou noyées dans un agent de compatibilité ou mouillant, ledit agent de compatibilité étant un tensioactif chimiquement réactif capable de réagir avec des groupes à la surface des fibres

minérales, l'agent de compatibilité possédant une première fraction capable d'interagir avec les fibres minérales porteuses de l'agent de pontage de manière à ce que les fibres minérales porteuses de l'agent de pontage soient facilement mélangeables avec l'agent de compatibilité, et une deuxième fraction capable d'interagir avec un polymère thermoplastique ou thermodurcissable de manière à ce que l'agent de compatibilité, par l'intermédiaire de sa deuxième fraction, soit facilement mélangeable avec le polymère ; ledit agent mouillant n'étant pas chimiquement réactif vis-à-vis des fibres minérales.

**8.** Granulé de fibres minérales selon la revendication 7, dans lequel l'agent mouillant est choisi parmi l'oxyde de polyéthylène, l'oxyde de polypropylène et des dérivés de ceux-ci.

**9.** Granulé de fibres minérales selon la revendication 7 ou 8, dans lequel une sphère de rayon $r_1$ pour les paramètres de solubilité de Hansen d, p et h de la première fraction de l'agent de compatibilité recouvre partiellement une sphère de rayon r' pour les paramètres de solubilité de Hansen d, p et h des groupes exposés de l'agent de pontage, et dans lequel une sphère de rayon $r_2$ pour les paramètres de solubilité de Hansen d, p et h de la deuxième fraction de l'agent de compatibilité recouvre partiellement une sphère de rayon r" pour les paramètres de solubilité de Hansen d, p et h du polymère.

**10.** Granulé de fibres minérales selon l'une quelconque des revendications 7 à 9, dans lequel la différence d'énergie relative entre la première fraction de l'agent de compatibilité et les groupes exposés de l'agent de pontage est inférieure à environ 1,0, et dans lequel la différence d'énergie relative entre la deuxième fraction de l'agent de compatibilité et le polymère est inférieure à environ 1,0.

**11.** Granulé de fibres minérales selon l'une quelconque des revendications 7 à 10, dans lequel l'agent de compatibilité est choisi parmi des tensioactifs non ioniques, cationiques et anioniques dont la masse moléculaire se situe dans la plage de 1000 à 25 000.

**12.** Granulé de fibres minérales selon la revendication 11, dans lequel le tensioactif est modifié par un ou plusieurs groupes réactifs choisis parmi des groupes acide maléique, anhydride maléique, acide malonique et ester malonique, et d'autres groupes acide carboxylique et anhydride.

**13.** Granulé de fibres minérales à écoulement libre approprié pour le renforcement de matériaux thermoplastiques ou thermodurcissables, ledit granulé comprenant des fibres minérales selon l'une quelconque des revendications 1 à 6 et qui sont revêtues de ou noyées dans un agent de compatibilité ou mouillant, le granulé de fibres minérales étant capable de s'écouler sous la forme d'un débit massique depuis une maquette de silo possédant des parois en acier inoxydable et une trémie ronde, un angle de trémie de 30° et une ouverture de trémie de 20 cm de diamètre.

**14.** Granulé de fibres minérales à écoulement libre selon la revendication 13, dans lequel le granulé de fibres minérales est capable de s'écouler sous la forme d'un débit massique depuis une maquette de silo possédant des parois en acier inoxydable et une trémie ronde, un angle de trémie de 30° et une ouverture de trémie de 15 cm de diamètre.

**15.** Granulé de fibres minérales à écoulement libre selon la revendication 13 ou 14, dans lequel :

a) le granulé de fibres minérales contient moins de 10% en poids de fibres minérales libres, où la quantité de fibres libres est déterminée par séchage d'un échantillon de granulé à une température de 105°C, puis tamisage des fibres libres avec des tamis possédant des ouvertures de 1400 $\mu$m et 600 $\mu$m, les fibres libres étant celles qui traversent les deux tamis ; et/ou
b) la densité apparente du granulé de fibres minérales est supérieure à 300 g/l.

**16.** Granulé de fibres minérales à écoulement libre selon la revendication 15, dans lequel :

a) le granulé de fibres minérales contient moins de 5% en poids de fibres minérales libres ; et/ou
b) la densité apparente du granulé de fibres minérales est supérieure à 350 g/l.

**17.** Granulé de fibres minérales à écoulement libre selon l'une quelconque des revendications 13 à 16, dans lequel le granulé de fibres minérales est tel que défini dans l'une quelconque des revendications 7 à 12.

**18.** Granulé thermoplastique approprié pour le moulage, comprenant des granulés d'un matériau thermoplastique avec un agent de compatibilité ou mouillant et des fibres minérales porteuses d'un agent de pontage selon l'une quelconque des revendications 1 à 6 réparties dans celui-ci, l'agent de compatibilité ou mouillant servant à améliorer la dispersibilité des fibres minérales dans le matériau thermoplastique afin d'obtenir une répartition essentiellement uniforme et une orientation essentiellement aléatoire des fibres minérales dans le matériau thermoplastique.

**19.** Granulé thermoplastique selon la revendication 18 comprenant un matériau thermoplastique choisi parmi des polyoléfines, incluant le polypropylène, le polyéthylène et des copolymères de ceux-ci, des polyamides, des polyuréthanes, des polyesters, des vinyles, incluant le chlorure de polyvinyle (PVC), des acryliques, des styrènes, des polycarbonates, des polyimides et des matériaux ABS.

**20.** Granulé thermoplastique selon la revendication 19, dans lequel le polymère thermoplastique est un polypropylène (référence : HD-120M de Borealis) et dans lequel le granulé, lorsqu'il est moulé sous la forme d'un échantillon d'essai standard contenant 30% en poids de fibres minérales et testé selon ISO R 527, possède une résistance à la traction d'au moins environ 55 MPa.

**21.** Granulé thermoplastique selon l'une quelconque des revendications 18 à 20, dans lequel l'agent de compatibilité est tel que défini dans la revendication 11 ou 12 et/ou l'agent mouillant est tel que défini dans la revendication 8.

**22.** Article mis en forme comprenant un matériau thermoplastique renforcé préparé à partir d'un granulé thermoplastique selon l'une quelconque des revendications 18 à 21.

**23.** Article mis en forme comprenant un matériau thermoplastique ou thermodurcissable renforcé et, réparties de manière essentiellement uniforme dans un ou plusieurs domaines du matériau thermoplastique ou thermodurcissable, des fibres de renfort minérales selon l'une quelconque des revendications 1 à 6.

**24.** Procédé de production de fibres minérales selon l'une quelconque des revendications 1 à 6, comprenant le filage de fibres minérales et l'application sur les fibres filées à chaud de 0,01 à 5% en poids, sur la base du poids des fibres, d'un agent de pontage en solution.

**25.** Procédé selon la revendication 24, dans lequel l'agent de pontage est appliqué sous la forme d'une solution aqueuse dont le pH se situe dans la plage d'environ 2 à 5 ou dans la plage d'environ 8 à 11.

**26.** Procédé selon la revendication 24 ou 25, dans lequel l'agent de pontage est pulvérisé sur des fibres minérales filées à chaud possédant une température d'environ 400 à 800°C.

**27.** Procédé de production d'un granulé de fibres minérales, comprenant le mélange et le compactage au rouleau des fibres minérales filées préparées selon l'une quelconque des revendications 24 à 26 avec un agent de compatibilité ou mouillant, dans lequel l'agent de compatibilité est un tensioactif chimiquement réactif qui est capable de réagir avec des groupes à la surface des fibres minérales, et l'agent mouillant n'est pas chimiquement réactif vis-à-vis des fibres minérales, et le séchage du mélange pour obtenir un granulé capable de s'écouler sous la forme d'un débit massique, ledit granulé comprenant des fibres minérales noyées dans l'agent de compatibilité ou mouillant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4528304 A
- EP 0060664 A
- DE 3205108 A
- SU 904288
- JP 61241361 A
- EP 0791087 B1


### Non-patent literature cited in the description


- doctoral dissertation. **HANSEN.** The Three-Dimensional Solubility Parameter and Solvent Diffusion Coefficient. Danish Technical Press, 1967
- **HANSEN.** 25 years with solubility parameters" ("25 år med opløselighedsparametrene. *Dansk Kemi,* 1992, vol. 73 (8), 18-22
- Anonymous, brochure. Co-act - a dynamic program for solvent selection. Exxon Chemical International Inc, 1989
- **DANTE ; CAILLAULT.** Program calculates solvent properties and solubility parameters. *Modern Paint and Coatings,* September 1989, 46
- **BARTON.** Handbook of Solubility Parameter and other Cohesion Parameters. CRC Press Inc, 1983
- **BARTON.** Handbook of Polymer-Liquid interaction Parameters and Solubility Parameters. CRC Press Inc, 1990